# EUROPÄISCHE PATENTSCHRIFT

(11) **EP 2 227 674 B1**
(45) Veröffentlichungstag und Bekanntmachung des Hinweises auf die Patenterteilung: **29.08.2018**
(21) Anmeldenummer: 08860930.0
(22) Anmeldetag: 10.11.2008
(51) Int. Cl.: G01C 19/56

(54) **DREHRATENSENSOR**
ANGULAR RATE SENSOR
CAPTEUR DE VITESSE DE ROTATION

(30) Priorität: 18.12.2007 DE 102007060942
(43) Veröffentlichungstag der Anmeldung: 15.09.2010
(73) Patentinhaber: Robert Bosch GmbH, 70442 Stuttgart (DE)
(72) Erfinder: CLASSEN, Johannes, 72764 Reutlingen (DE); GRACKI, Sebastian, 72762 Reutlingen (DE)
(86) Internationale Anmeldenummer: PCT/EP2008/065236
(87) Internationale Veröffentlichungsnummer: WO 2009/077263

(56) Entgegenhaltungen:
- EP-A- 1 365 211
- EP-A1- 2 208 020
- WO-A-03/058167
- US-A1- 2007 220 973
- US-A1- 2007 222 011

## Beschreibung

### Stand der Technik

Die Erfindung geht aus von einem Drehratensensor gemäß dem Oberbegriff des Anspruchs 1.

Solche Drehratensensoren sind allgemein bekannt. Beispielsweise ist aus der Druckschrift DE 195 19 488 A1 ein Drehratensensor mit einer ersten und einer zweiten Schwingmasse bekannt, wobei die erste und die zweite Schwingmasse mittels Anregungsmitteln zu einer Schwingung angeregt werden, wobei eine erste Auslenkung der ersten Schwingmasse mittels Auswertungsmitteln und eine zweite Auslenkung der zweiten Schwingmasse mittels weiteren Auswertungsmitteln erfasst werden und wobei die erste und die zweite Auslenkung nicht parallel zueinander und nicht parallel zur Schwingung vorgesehen sind. Nachteilig an diesem Drehratensensor ist, dass die erste Auslenkung nicht differenziell auswertbar ist und somit ein erstes Auswertungssignal der Auswertungsmittel neben der Abhängigkeit von der Coriolis-Kraft vergleichsweise viele potentielle Störeinflüsse aufweist. Die Druckschriften EP 1 365 211 B1 und WO 03 / 058 167 A1 offenbaren ferner einen Drehratensensor, der jeweils zwei gegenphasige zueinander schwingende Coriolis-Massen zur differenziellen Vermessung einer Drehrate parallel oder senkrecht zur Haupterstreckungsebene aufweisen. Eine Sensoranordnung zur zusätzlichen Vermessung von Beschleunigungen ist ferner aus US 2007 / 0 220 973 A1 bekannt.

### Offenbarung der Erfindung

Der erfindungsgemäße Drehratensensor gemäß dem unabhängigen Anspruch hat gegenüber dem Stand der Technik den Vorteil, dass auf einer vergleichsweise geringen Bauraumfläche eine volldifferenzielle Auswertung der ersten Auslenkung ermöglicht wird. Das erste Coriolis-Element wird durch die Anregungsmittel zur Schwingung parallel zur ersten Richtung angeregt. Eine erste Drehrate des Drehratensensors um eine zweite Achse, welche parallel zu einer sowohl zur ersten, als auch zur dritten Richtung im Wesentlichen senkrechten zweiten Richtung verläuft, erzeugt eine erste Corioliskraft auf das erste Coriolis-Element, welche parallel zur dritten Richtung wirkt und aufgrund der Ausbildung des ersten Coriolis-Elements als Wippe die erste Auslenkung parallel zur dritten Richtung erzeugt. Die Vermessung der ersten Auslenkung durch die ersten Auswertemittel erzeugt erste Detektionssignale, welches von der ersten Corioliskraft und somit von der Drehrate um die zweite Achse abhängen. Insbesondere aufgrund einer torsionsschwingfähigen Lagerung des ersten Coriolis-Elements um eine Drehachse, welche insbesondere parallel zur Haupterstreckungsebene angeordnet ist, erzeugt die erste Corioliskraft die erste Auslenkung, welche durch die ersten Detektionsmittel messbar ist. Die Detektionsmittel umfassen vorzugsweise Detektionselektroden, welche die erste Auslenkung kapazitiv messen. Die Ausbildung des ersten Coriolis-Elements als Wippe ermöglicht eine volldifferenzielle Auswertung der Signale des ersten Detektionsmittels. Die Erfindung ermöglicht somit eine volldifferenzielle Erfassung der ersten Drehrate im Gegensatz zum Stand der Technik mit lediglich einem einzigen Coriolis-Element, so dass der benötigte Bauraum im Vergleich zum Stand der Technik in erheblicher Weise reduziert ist und daher eine kostengünstigere Herstellung des Drehratensensor und eine einfachere Implementierung des Drehratensensors ermöglicht wird. Der Drehratensensor weist ein zweites Coriolis-Element auf, wobei die Anregungsmittel zur Schwingungsanregung des zweiten Coriolis-Elements in der ersten Richtung vorgesehen sind und wobei ferner zweite Detektionsmittel zur Detektion einer zweiten Auslenkung des zweiten Coriolis-Elements in einer sowohl zur ersten Richtung, als auch zur dritten Richtung im Wesentlichen senkrechten zweiten Richtung vorgesehen sind. Besonders vorteilhaft wird somit auf einer vergleichsweise geringen Bauraumfläche eine volldifferenzielle Erfassung sowohl der ersten Auslenkung, als auch der zweiten Auslenkung ermöglicht, wobei insbesondere Drehraten um die zweite und um die dritte Achse volldifferenziell auswertbar sind. Das zweite Coriolis-Element wird durch die Anregungsmittel zur Schwingung parallel zur ersten Richtung angeregt. Eine zweite Drehrate des Drehratensensors um eine dritte Achse parallel zur dritten Richtung erzeugt eine zweite Corioliskraft auf das zweite Coriolis-Element, welche parallel zur zweiten Richtung wirkt und aufgrund einer wenigstens bezüglich der zweiten Richtung schwingfähigen Lagerung des zweiten Coriolis-Elements die zweite Auslenkung des zweiten Coriolis-Elements hervorruft. Die Vermessung der zweiten Auslenkung durch die zweiten Auswertemittel erzeugt zweite Detektionssignale, welches von der zweiten Corioliskraft und somit von der zweiten Drehrate um die dritte Achse abhängen. Die ersten Auswertemittel umfassen bevorzugt Kammstrukturen zur Durchführung einer kapazitiven Messung, welche insbesondere im Innern des zweiten Coriolis-Elements angeordnet sind, so dass eine volldifferentielle Auswertung der zweiten Detektionssignale ermöglicht wird.

Es ist vorgesehen, dass eine Drehachse der Wippe parallel zur Haupterstreckungsebene verläuft, wobei die Wippe bezüglich der Drehachse bevorzugt eine asymmetrische Massenverteilung aufweist und wobei besonders bevorzugt die Drehachse im Wesentlichen parallel zur ersten Richtung oder zur zweiten Richtung verläuft. In vorteilhafter Weise erzeugt aufgrund der asymmetrischen Massenverteilung der Wippe bezüglich der Drehachse die erste Corioliskraft eine Drehbewegung der Wippe um die Drehachse. Diese Drehbewegung bewirkt die erste Auslenkung, welche vorzugsweise durch die ersten Detektionsmittel detektiert und volldifferenziell ausgewertet werden. Besonders bevorzugt basiert die Vermessung der ersten Auslenkung durch die ersten Detektionsmittel auf einer kapazitiven Messung zwischen den Detektionselektroden und wenigstens einer Gegenelektrode, wobei die Gegenelektrode ganz besonders bevorzugt an der Wippe angeordnet ist und/oder von der Wippe selbst gebildet wird. Die Signale der Detektionselektroden sind insbesondere volldifferenziell auswertbar, ohne dass weitere Detektionselektroden auf einer dem Substrat senkrecht zur Haupterstreckungsebene gegenüberliegenden Seite des ersten Coriolis-Elements benötigt werden.

Vorteilhafte Ausgestaltungen und Weiterbildungen der Erfindung sind den Unteransprüchen, sowie der Beschreibung unter Bezugnahme auf die Zeichnung entnehmbar.

Gemäß einer weiteren bevorzugten Weiterbildung ist vorgesehen, dass das erste Detektionsmittel eine erste Detektionsmittelkomponente und eine weitere erste Detektionsmittelkomponente umfasst, wobei zwischen der ersten Detektionsmittelkomponente und der weiteren ersten Detektionsmittelkomponenten vorzugsweise die Drehachse oder eine parallel zur Drehachse und parallel zur dritten Richtung verlaufende Ebene angeordnet ist. Besonders vorteilhaft wird somit eine volldifferenzielle Auswertung der erste Drehrate ermöglicht, wobei ein erstes Detektionssignal der ersten Detektionsmittelkomponente volldifferenziell mit einem weiteren ersten Detektionssignals der weiteren Detektionsmittelkomponente ausgewertet wird.

Gemäß einer weiteren bevorzugten Weiterbildung ist vorgesehen, dass das erste Coriolis-Element mittels erster Federn und das zweite Coriolis-Element mittels zweiter Federn an einem Rahmen befestigt sind und wobei bevorzugt der Rahmen mittels dritter Federn am Substrat befestigt ist und wobei besonders bevorzugt die Anregungsmittel den Rahmen zur Schwingung anregen. In besonders vorteilhafter Weise sind das erste und das zweite Coriolis-Element miteinander über den Rahmen verbunden, so dass lediglich durch die Anregung des Rahmens die identische Schwingungsanregung sowohl des ersten, als auch des zweiten Coriolis-Elements erfolgt. Die Anregungsmittel sind besonders bevorzugt als Kammantriebe ausgebildet, welche ganz besonders bevorzugt an zwei gegenüberliegenden Seiten des Rahmens angeordnet sind und die Resonanzfrequenz des Rahmens alternierend anregen.

Gemäß einer weiteren bevorzugten Weiterbildung ist vorgesehen, dass die zweiten und/oder die dritten Federn U-Federn und bevorzugt mäandrierte U-Federn umfassen und/oder dass die ersten Federn Torsionsfedern und bevorzugt Schlitz-oder Leiterstrukturen aufweisende Torsionsfedern umfassen, wobei bevorzugt die zweite Feder lediglich in der zweiten Richtung, die dritte Feder lediglich in der ersten Richtung und/oder die erste Feder lediglich bezüglich einer Torsion um die Drehachse weich ausgebildet sind. In vorteilhafter Weise werden durch die Ausbildung der Torsionsfeder als geschlitzte Feder oder als Leiterfeder unerwünschte Rotationsbewegungen des ersten Coriolis-Elements aufgrund der Schwingung unterdrückt, da derartige Torsionsfedern Drehbewegungen um die Drehachse zulassen und gleichzeitig vergleichsweise verwindungssteif gegenüber Drehbewegungen senkrecht zur Haupterstreckungsebene sind. Die Leiterfedern weisen insbesondere zwei parallele Balken auf, welche durch eine Mehrzahl von Querstegen miteinander verbunden sind. Besonders vorteilhaft werden die zweiten und/oder dritten Federn als U-Federn ausgeführt, da diese eine vergleichsweise geringe Nichtlinearität aufweisen. Besonders bevorzugt werden diese Federn mäandriert, so dass vergleichsweise geringe Federsteifigkeiten in der Vorzugsrichtung realisierbar sind.
Gemäß einer weiteren bevorzugten Weiterbildung ist vorgesehen, dass dritte Detektionsmittel zur Detektion der Schwingung des Rahmens vorgesehen sind, wobei die dritten Detektionsmittel und/oder die Anregungsmittel bevorzugt als Kammstrukturen ausgebildet sind. Da die erste und die zweite Corioliskraft neben der ersten und zweiten Drehrate auch von der Schwingung parallel zur ersten Achse abhängen, ist es vorteilhaft die Schwingung durch die dritten Detektionsmittel zu vermessen. Besonders vorteilhaft werden durch die Verbindung des ersten und des zweiten Coriolis-Elements durch den Rahmen lediglich dritte Detektionsmittel zur Vermessung der Schwingung des Rahmens benötigt. Ganz besonders bevorzugt sind die dritten Detektionsmittel als kapazitiv messende Kammstrukturen an zwei gegenüberliegenden Seiten des Rahmens ausgebildet.
Gemäß einer weiteren bevorzugten Weiterbildung ist vorgesehen, dass die zweiten Detektionsmittel als Kammstrukturen ausgebildet sind, welche bevorzugt zusammen mit dem zweiten Coriolis-Element in einer zu einer Haupterstreckungsebene des Substrats parallelen Ebene angeordnet sind und/oder die zweiten Detektionsmittel in einer zur Haupterstreckungsebene senkrechten Richtung überlappend zum erstem Coriolis-Element angeordnet sind. Ganz besonders bevorzugt sind die zweiten Detektionsmitteln im Innern einer Aussparung des zweiten Coriolis-Elements angeordnet, so dass die benötigte Grundfläche des Drehratensensors vergleichsweise gering ist. Erfindungsgemäß ist vorgesehen, dass erste Anschläge zur Begrenzung einer ersten Bewegung des ersten Coriolis-Elements in die erste, zweite und/oder dritte Richtung, zweite Anschläge zur Begrenzung einer zweiten Bewegung des zweiten Coriolis-Elements in die erste, zweite und/oder dritte Richtung und/oder dritte Anschläge zur Begrenzung einer dritten Bewegung des Rahmens in die erste, zweite und/oder dritte Richtung vorgesehen sind. Besonders vorteilhaft wird somit der Drehratensensor beim Wirken von vergleichsweise großen Beschleunigungskräften vor Schäden geschützt. Insbesondere werden im Überlastfall Kurzschlüsse, Federbrüche, Verhaker oder Partikelbildung durch die Begrenzung der Beweglichkeit der beweglichen Elemente vermieden. Vorzugsweise sind elastische bzw. federnde Anschläge vorgesehen.

Gemäß einer weiteren bevorzugten Weiterbildung ist vorgesehen, dass zur Auswuchtung des Rahmens bezüglich der Schwingung eine angepasste Massenverteilung des Rahmens, eine angepasste Anordnung der dritten Federn und/oder ein spiegelsymmetrischer Aufbau des Drehratensensors bezüglich einer Symmetrieachse parallel zur ersten Richtung vorgesehen ist. Besonders vorteilhaft wird durch einen derart spiegelsymmetrischen Aufbau das Auftreten von Rotationsanteilen der Schwingung des Rahmen, welche insbesondere durch die asymmetrische Massenverteilung der Wippe hervorgerufen werden, unterdrückt. Insbesondere weist der Rahmen eine vollständig massensymmetrische Verteilung bezüglich der ersten Achse bzw. der Schwingungsrichtung auf. Besonders bevorzugt kann auch durch eine angepasste Anordnung der dritten Federn eine inhomogene Massenverteilung und/oder eine ungleichmäßige Form des Rahmens zur Unterdrückung von Rotationsanteilen bei der Schwingung unterdrückt werden. Dazu werden die dritten Federn derart angeordnet, dass der Rahmen bezüglich seiner Schwingung im Wesentlichen vollständig ausgewuchtet ist.

Ein weiterer Gegenstand ist ein Verfahren zum Betrieb eines Drehratensensors, wobei das erste Detektionsmittel wenigstens ein erstes und ein weiteres erstes Detektionssignal erzeugt, wobei das erste und das weitere erste Detektionssignal abhängig von einer Drehbewegung des Drehratensensors um eine zur zweiten Richtung parallelen zweite Achse ist. Besonders vorteilhaft wird somit eine volldifferenzielle Auswertung einer Drehrate um die zweite Achse mit nur einem einzigen Coriolis-Element ermöglicht.

Gemäß einer bevorzugten Weiterbildung ist vorgesehen, dass das erste Detektionssignal von der ersten Detektionsmittelkomponente und das weitere Detektionssignal von der weiteren Detektionsmittelkomponente erzeugt werden. Besonders vorteilhaft wird somit eine Rotation des ersten Coriolis-Elements um die Drehachse aufgrund der ersten Coriolis-Kraft sowohl von der ersten Detektionsmittelkomponente, als auch von der weiteren Detektionsmittelkomponente gemessen, so dass zur vergleichsweise präzisen Detektion der ersten Drehraten mit möglichst wenig Störeinflüssen das erste Detektionssignal mit dem weiteren ersten Detektionssignal volldifferenziell auswertbar ist.

Gemäß einer weiteren bevorzugten Weiterbildung ist vorgesehen, dass ein zweites und ein weiteres zweites Detektionssignal vom zweiten Detektionsmittel erzeugt werden, wobei das zweite und das weitere zweite Detektionssignal abhängig von einer Drehbewegung des Drehratensensors um eine zur dritten Richtung parallelen dritten Achse sind. Besonders vorteilhaft ist daher mit einem einzigen Drehratensensor, welcher lediglich zwei Coriolis-Elemente aufweist, gleichzeitig die volldifferenzielle Vermessung sowohl der ersten Drehrate um die zweite Achse, als auch der zweiten Drehrate um die dritte Achse möglich. Aufgrund der Erfassung der Drehraten mit lediglich zwei Coriolis-Elementen wird im Vergleich zum Stand der Technik eine wesentlich bauraumkompaktere und somit kostengünstigere Realisierung des Drehratensensors ermöglicht.

Gemäß einer bevorzugten Weiterbildung ist vorgesehen, dass das erste und das weitere erste Detektionssignal differenziell ausgewertet werden und/oder dass das zweite und das weitere zweite Detektionssignal differenziell ausgewertet werden. Besonders vorteilhaft wird somit die Präzision der Vermessung der ersten und/oder der zweiten Drehrate in erheblicher Weise erhöht, da sowohl das Signal des ersten, als auch das Signal des zweiten Detektionsmittels bezüglich potentieller Fehlereinflüsse bei der volldifferentiellen Signalverarbeitung korrigierbar sind.

Ausführungsbeispiele der vorliegenden Erfindung sind in den Zeichnungen dargestellt und in der nachfolgenden Beschreibung näher erläutert.

### Kurze Beschreibung der Zeichnungen

Es zeigen
**Figur 1** eine schematische Aufsicht eines Drehratensensors gemäß einer ersten Ausführungsform der vorliegenden Erfindung,
**Figur 2a** eine schematische Aufsicht eines Teilbereichs eines Drehratensensors gemäß der ersten Ausführungsform der vorliegenden Erfindung,
**Figur 2b** eine schematische Aufsicht eines Teilbereichs eines Drehratensensors gemäß einer zweiten Ausführungsform der vorliegenden Erfindung,
**Figur 2c** eine schematische Aufsicht eines Teilbereichs eines Drehratensensors gemäß einer dritten Ausführungsform der vorliegenden Erfindung,
**Figur 3** eine schematische Aufsicht eines weiteren Teilbereichs eines Drehratensensors gemäß einer vierten Ausführungsform der vorliegenden Erfindung und
**Figur 4** eine schematische Aufsicht eines Drehratensensors gemäß einer fünften Ausführungsform der vorliegenden Erfindung.

### Ausführungsform(en) der Erfindung

In den verschiedenen Figuren sind gleiche Teile stets mit den gleichen Bezugszeichen versehen und werden daher in der Regel auch jeweils nur einmal benannt.

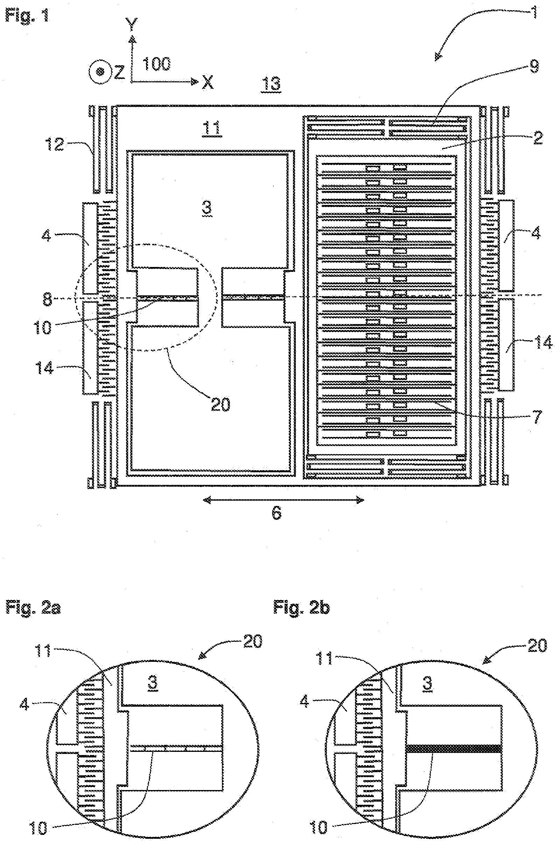

In **Figur 1** ist eine schematische Aufsicht eines Drehratensensors 1 gemäß einer beispielhaften ersten Ausführungsform der vorliegenden Erfindung dargestellt, wobei der Drehratensensor 1 ein Substrat 13, ein erstes Coriolis-Element 3 und ein zweites Coriolis-Element 2 aufweist, wobei als Kammstrukturen ausgebildeten Anregungsmittel 4 zur kapazitiven Schwingungsanregung 6 des ersten und des zweiten Coriolis-Elements 3,2 in einer ersten Richtung X vorgesehen sind, wobei zweite Detektionsmittel 7 zur Detektion einer zweiten Auslenkung des zweiten Coriolis-Elements 2 in einer zur ersten Richtung X im Wesentlichen senkrechten zweiten Richtung Y vorgesehen sind und wobei erste Detektionsmittel zur Detektion einer ersten Auslenkung des ersten Coriolis-Elements 3 in einer sowohl zur ersten, als auch zur zweiten Richtung X, Y im Wesentlichen senkrechten dritten Richtung Z vorgesehen sind. Das erste Coriolis-Element 3 ist als Wippe ausgebildet ist, wobei die Wippe eine Drehachse 8 parallel zu einer Haupterstreckungsebene 100 des Substrats 13 und parallel zur ersten Richtung X aufweist, wobei die Wippe bezüglich der Drehachse 8 eine asymmetrische Massenverteilung aufweist. Unterhalb der Wippe bzw. senkrecht zur Haupterstreckungsebene 100 auf der Seite des Substrats 13 bezüglich der Wippe sind erste Detektionselektroden der ersten Detektionsmittel angeordnet, welche erste und weitere erste Detektionssignale in Abhängigkeit einer auf die Wippe wirkenden ersten Corioliskraft und somit auch in Abhängigkeit einer ersten Drehrate des Drehratensensors 1 um eine zweite Achse parallel zur zweiten Richtung Y erzeugt. Diese ersten und weiteren ersten Detektionssignale werden miteinander volldifferenziell ausgewertet. Die zweiten Detektionsmittel 7 sind als kapazitiv messende Kamstrukturen in einer zur Haupterstreckungsebene 100 parallelen Ebene mit dem zweiten Coriolis-Element 2 ausgebildet, wobei die zweiten Detektionsmittel 7 in einer Aussparung im Innern des zweiten Coriolis-Elements 2 angeordnet sind und wobei die zweiten Detektionsmittel 7 ein zweites und ein weiteres zweites Detektionssignal erzeugen, welches abhängig von einer auf das zweite Coriolis-Element 2 parallel zur zweiten Richtung Y wirkenden ersten Corioliskraft und somit auch abhängig von einer zweiten Drehrate des Drehratensensors 1 um eine dritte Achse parallel zur dritten Richtung Z ist. Das zweite und das weitere zweite Detektionssignal werden vorzugsweise ebenfalls volldifferentiell ausgewertet. Das zweite Coriolis-Element 2 wird mittels zweiter Federn 9 und das erste Coriolis-Element 3 mittels erster Federn 10 an einem Rahmen 11 befestigt, wobei der Rahmen 11 mittels dritter Federn 12 am Substrat 13 befestigt ist. Die Schwingungsanregung des ersten und des zweiten Coriolis-Elements 3, 2 erfolgt durch die Schwingungsanregung des Rahmens 11 mittels der Anregungsmittel 4, welche als Kammstrukturen an zwei in der ersten Richtung X einander gegenüberliegenden Seiten des Rahmens 11 am Rahmen 11 angeordnet sind. In der zweiten Richtung neben den Anregungsmitteln 4 sind dritte ebenfalls als Kammstrukturen ausgebildete Detektionsmittel 14 angeordnet, welche die Schwingung des Rahmens 11 kapazitiv messen. Die zweiten und die dritten Federn 9, 12 sind als mäandrierte U-Federn ausgebildet, während die ersten Federn 10 Torsionsfedern mit einer Leiterstrukturen umfassen, wobei die zweite Feder 9 lediglich in der zweiten Richtung Y, die dritte Feder 12 lediglich in der ersten Richtung X und die erste Feder 10 lediglich bezüglich einer Torsion um die Drehachse 8 weich ausgebildet sind. Ferner sind die dritten Federn 12 vorzugsweise derart ausgebildet bzw. am Rahmen 11 angeordnet, dass der Rahmens 11 bezüglich der Schwingung 6 ausgewuchtet ist.

In **Figur 2a** ist eine schematische Aufsicht eines Teilbereichs 20 eines Drehratensensors 1 gemäß der ersten Ausführungsform der vorliegenden Erfindung dargestellt, wobei der abgebildete Teilbereich 20 die erste Feder 10 abbildet, wobei die erste Feder 10 zwei parallele Balken aufweist, welche durch eine Mehrzahl von Querstegen miteinander verbunden sind. Eine derartig ausgebildete Torsionsfeder bzw. erste Feder 10 lässt insbesondere Drehbewegungen um die Drehachse 8 zu, während sie gleichzeitig vergleichsweise verwindungssteif gegenüber Drehbewegungen senkrecht zur Haupterstreckungsebene sind. Dadurch werden insbesondere parallel zur zweiten Richtung Y auf das erste Coriolis-Element 3 wirkende Corioliskräfte, sowie durch die Schwingung des Rahmens parallel zur ersten Richtung X und die asymmetrische Massenverteilung der Wippe hervorgerufene Schlingerbewegungen und/oder Drehbewegungen um eine Achse parallel zur dritten Richtung Z des ersten Coriolis-Elements 3 unterdrückt.

In **Figur 2b** ist eine schematische Aufsicht eines Teilbereichs 20 eines Drehratensensors gemäß einer zweiten Ausführungsform der vorliegenden Erfindung, wobei die zweite Ausführungsform vollständig identisch der ersten Ausführungsform abgebildet in Figur 1 und Figur 2a ist, wobei lediglich die erste Feder 10 als Einfachfeder ausgeführt ist.

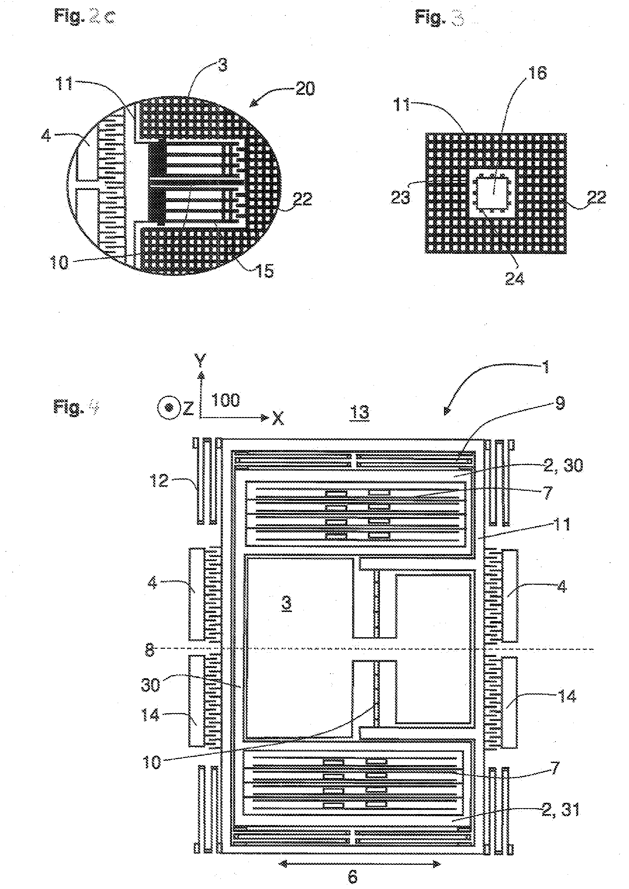

In **Figur 2c** ist eine schematische Aufsicht eines Teilbereichs 20 eines Drehratensensor 1 gemäß einer dritten Ausführungsform der vorliegenden Erfindung dargestellt, wobei die dritte Ausführungsform identisch zur ersten Ausführungsform illustriert in den Figuren 1 und 2a ist, wobei der Drehratensensor 1 zusätzlich einen ersten Anschlag 15 aufweist, welcher eine Bewegung des ersten Coriolis-Elements 3 sowohl in die erste, als auch in die zweite Richtung X, Y begrenzt. Der erste Anschlag 15 ist insbesondere als federnder erster Anschlag 15 ausgebildet, so dass die Bewegung des ersten Coriolis-Elements 3 in die erste und/oder in die zweite Richtung X, Y über einer durch den ersten Anschlag 15 wohl definierten jeweiligen Maximalausschlag hinaus vergleichsweise schonend gestoppt wird. Das erste Coriolis-Element 3 weist ferner Perforationslöcher 22 auf.

In **Figur 3** ist eine schematische Aufsicht eines weiteren Teilbereichs 2 eines Drehratensensor 1 gemäß einer vierten Ausführungsform der vorliegenden Erfindung dargestellt, wobei die vierte Ausführungsform im Wesentlichen der ersten Ausführungsform identisch ist, wobei der weitere Teilbereich den Rahmen 11 und einen dritten Anschlag 16 aufweist. Der dritte Anschlag 16 ist insbesondere mit dem Substrat 13 fest verbunden und in einer Aussparung 23 des Rahmens 11 derart angeordnet, dass eine Bewegung des Rahmens sowohl in der ersten Richtung X, als auch in der zweiten Richtung Y durch einen jeweiligen Anschlagskontakt mit dem dritten Anschlag 16 begrenzt wird. Der dritte Anschlag 16 weist ferner vorzugsweise Anschlagsnoppen 24 auf.

In **Figur 4** ist eine schematische Aufsicht eines Drehratensensors gemäß einer fünften Ausführungsform der vorliegenden Erfindung dargestellt, wobei die fünfte Ausführungsform im Wesentlichen der ersten Ausführungsform illustriert in Figur 1 identisch ist, wobei das erste und das zweite Coriolis-Element 3, 2 derart angeordnet sind, dass der Drehratensensor 1 bzw. wenigstens der Rahmen 11 bezüglich einer in der ersten Richtung X verlaufenden Symmetrieachse 16, welche bezüglich der zweiten Richtung Y in der Mitte des Rahmens angeordnet ist, im Wesentlichen symmetrisch und insbesondere massensymmetrisch ausgebildet ist. Das erste Coriolis-Element 3 weist einer zur zweiten Richtung Y parallele Drehachse auf, während das zweite Coriolis-Element 2 bezüglich der Symmetrieachse 16 in einen ersten und einen zweiten Teil 30, 31 aufgeteilt ist. Der erste und der zweite Teil 30, 31 sind über einen starren Verbindungssteg 32 starr miteinander verbunden, wobei zwischen dem ersten und dem zweiten Teil 30, 31 das erste Coriolis-Element 3 angeordnet ist.

## Patentansprüche

1. Drehratensensor (1) mit einem Substrat (13) und einem ersten Coriolis-Element (3), wobei Anregungsmittel (4) zur Schwingungsanregung (6) des ersten Coriolis-Elements (3) in einer ersten Richtung (X) vorgesehen sind, wobei erste Detektionsmittel zur Detektion einer ersten Auslenkung des ersten Coriolis-Elements (3) in einer zur ersten Richtung (X) im Wesentlichen senkrechten dritten Richtung (Z) vorgesehen sind, wobei das erste Coriolis-Element (3) als Wippe ausgebildet ist, wobei eine Drehachse (8) der Wippe parallel zu einer Haupterstreckungsebene (100) des Substrats (13) verläuft, wobei die Wippe bezüglich der Drehachse (8) eine asymmetrische Massenverteilung aufweist, wobei der Drehratensensor ein zweites Coriolis-Element (2) aufweist, wobei die Anregungsmittel (4) zur Schwingungsanregung (6) des zweiten Coriolis-Elements (2) in der ersten Richtung (X) vorgesehen sind,
**dadurch gekennzeichnet, dass** ferner zweite Detektionsmittel (7) zur Detektion einer zweiten Auslenkung des zweiten Coriolis-Elements (2) in einer sowohl zur ersten Richtung (X), als auch zur dritten Richtung (Z) im Wesentlichen senkrechten zweiten Richtung (Y) vorgesehen sind, und dass erste Anschläge (15) zur Begrenzung einer ersten Bewegung des ersten Coriolis-Elements (3) in die erste, zweite und/oder dritte Richtung (X, Y, Z), zweite Anschläge zur Begrenzung einer zweiten Bewegung des zweiten Coriolis-Elements (2) in die erste, zweite und/oder dritte Richtung (X, Y, Z) und/oder dritte Anschläge (16) zur Begrenzung einer dritten Bewegung eines Rahmens (11) des Drehratensensors (1) in die erste, zweite und/oder dritte Richtung (X, Y, Z) vorgesehen sind.

2. Drehratensensor (1) nach Anspruch 1, **dadurch gekennzeichnet, dass** das erste Detektionsmittel eine erste Detektionsmittelkomponente und eine weitere erste Detektionsmittelkomponente umfasst, wobei zwischen der ersten Detektionsmittelkomponente und der weiteren ersten Detektionsmittelkomponenten vorzugsweise die Drehachse (8) oder eine parallel zur Drehachse (8) und parallel zur dritten Richtung (z) verlaufende Ebene angeordnet ist.

3. Drehratensensor (1) nach einem der vorhergehenden Ansprüche, **dadurch gekennzeichnet, dass** das erste Coriolis-Element (3) mittels erster Federn (10) und/oder das zweite Coriolis-Element (2) mittels zweiter Federn (9) an einem Rahmen (11) befestigt sind und wobei bevorzugt der Rahmen (11) mittels dritter Federn (12) am Substrat (13) befestigt ist und wobei besonders bevorzugt die Anregungsmittel (4) den Rahmen zur Schwingung (6) anregen.

4. Drehratensensor (1) nach Anspruch 3, **dadurch gekennzeichnet, dass** die zweiten und/oder die dritten Federn (9, 12) U-Federn und bevorzugt mäandrierte U-Federn umfassen und/oder dass die ersten Federn (10) Torsionsfedern und bevorzugt Schlitz- oder Leiterstrukturen aufweisende Torsionsfedern umfassen, wobei bevorzugt die zweite Feder (9) lediglich in der zweiten Richtung (Y), die dritte Feder (12) lediglich in der ersten Richtung (X) und/oder die erste Feder (9) lediglich bezüglich einer Torsion um die Drehachse (8) weich ausgebildet sind.

5. Drehratensensor (1) nach einem der Ansprüche 3 oder 4, **dadurch gekennzeichnet, dass** dritte Detektionsmittel (14) zur Detektion der Schwingung (6) des Rahmens (11) vorgesehen sind, wobei die dritten Detektionsmittel (14) und/oder die Anregungsmittel (4) bevorzugt als Kammstrukturen ausgebildet sind.

6. Drehratensensor (1) nach einem der vorhergehenden Ansprüche, **dadurch gekennzeichnet, dass** die zweiten Detektionsmittel (7) als Kammstrukturen ausgebildet sind, welche bevorzugt zusammen mit dem zweiten Coriolis-Element (2) in einer zu einer Haupterstreckungsebene (100) des Substrats (13) parallelen Ebene angeordnet sind und/oder die ersten Detektionsmittel in der dritten Richtung (Z) überlappend zum ersten Coriolis-Element (3) angeordnet sind.

## Claims

1. Rate-of-rotation sensor (1) comprising a substrate (13) and a first Coriolis element (3), excitation means (4) being provided to excite the first Coriolis element (3) to oscillate (6) in a first direction (X), first detection means being provided to detect a first deflection of the first Coriolis element (3) in a third direction (Z), substantially perpendicular to the first direction (X), the first Coriolis element (3) being formed as a rocker, an axis of rotation (8) of the rocker extending parallel to a main plane of extent (100) of the substrate (13), the rocker having an asymmetrical mass distribution relative to the axis of rotation (8), the rate-of-rotation sensor having a second Coriolis element (2), the excitation means (4) being provided to excite the second Coriolis element (2) to oscillate (6) in the first direction (X),
**characterized in that**,
in addition, second detection means (7) are provided to detect a second deflection of the second Coriolis element (2) in a second direction (Y) substantially perpendicular both to the first direction (X) and to the third direction (Z), and **in that** first stops (15) are provided to limit a first movement of the first Coriolis element (3) in the first, second and/or third direction (X, Y, Z), second stops are provided to limit a second movement of the second Coriolis element (2) in the first, second and/or third direction (X, Y, Z), and/or third stops (16) are provided to limit a third movement of a frame (11) of the rate-of-rotation sensor (1) in the first, second and/or third direction (X, Y, Z).

2. Rate-of-rotation sensor (1) according to Claim 1, **characterized in that** the first detection means comprises a first detection means component and a further first detection means component, the axis of rotation (8) or a plane extending parallel to the axis of rotation (8) and parallel to the third direction (z) preferably being arranged between the first detection means component and the further first detection means component.

3. Rate-of-rotation sensor (1) according to one of the preceding claims, **characterized in that** the first Coriolis element (3) is fixed to a frame (11) by means of first springs (10) and/or the second Coriolis element (2) is fixed to a frame (11) by means of second springs (9), and the frame (11) preferably being fixed to the substrate (13) by means of third springs (12), and the excitation means (4) particularly preferably exciting the frame to oscillate (6).

4. Rate-of-rotation sensor (1) according to Claim 3, **characterized in that** the second and/or the third springs (9, 12) comprise U-shaped springs and preferably serpentine U-shaped springs, and/or **in that** the first springs (10) comprise torsion springs and preferably torsion springs having slot or ladder structures, preferably the second springs (9) being configured to be soft only in the second direction (Y), the third springs (12) being configured to be soft only in the first direction (X), and/or the first springs (9) being configured to be soft only with respect to a torsion about the axis of rotation (8).

5. Rate-of-rotation sensor (1) according to either of Claims 3 and 4, **characterized in that** third detection means (14) are provided to detect the oscillation (6) of the frame (11), the third detection means (14) and/or the excitation means (4) preferably being formed as comb structures.

6. Rate-of-rotation sensor (1) according to one of the preceding claims, **characterized in that** the second detection means (7) are formed as comb structures which, preferably together with the second Coriolis element (2), are arranged on a plane parallel to a main plane of extent (100) of the substrate (13), and/or the first detection means are arranged in the third direction (Z), overlapping the first Coriolis element (3).

## Revendications

1. Capteur de vitesse de rotation (1) avec un substrat (13) et un premier élément de Coriolis (3), dans lequel il est prévu des moyens d'excitation (4) pour l'excitation de l'oscillation (6) du premier élément de Coriolis (3) dans une première direction (X), dans lequel il est prévu des premiers moyens de détection pour la détection d'une première déviation du premier élément de Coriolis (3) dans une troisième direction (Z) essentiellement perpendiculaire à la première direction (X), dans lequel le premier élément de Coriolis (3) est formé par une bascule, dans lequel un axe de rotation (8) de la bascule s'étend parallèlement à un plan d'extension principal (100) du substrat (13), dans lequel la bascule présente une distribution de masses asymétrique par rapport à l'axe de rotation (8), dans lequel le capteur de vitesse de rotation présente un second élément de Coriolis (2), dans lequel les moyens d'excitation (4) sont prévus pour l'excitation de l'oscillation (6) du second élément de Coriolis (2) dans la première direction (X), **caractérisé en ce qu'**il est en outre prévu des seconds moyens de détection (7) pour la détection d'une seconde déviation du second élément de Coriolis (2) dans une deuxième direction (Y) essentiellement perpendiculaire aussi bien à la première direction (X) qu'à la troisième direction (Z), et **en ce qu'**il est prévu des premières butées (15) pour la limitation d'un premier mouvement du premier élément de Coriolis (3) dans la première, la deuxième et/ou la troisième direction (X, Y, Z), des deuxièmes butées pour la limitation d'un deuxième mouvement du second élément de Coriolis (2) dans la première, la deuxième et/ou la troisième direction (X, Y, Z) et/ou des troisièmes butées (16) pour la limitation d'un troisième mouvement d'un cadre (11) du capteur de vitesse de rotation (1) dans la première, la deuxième et/ou la troisième direction (X, Y, Z).

2. Capteur de vitesse de rotation (1) selon la revendication 1, **caractérisé en ce que** le premier moyen de détection comprend une première composante de moyen de détection et une autre première composante de moyen de détection, dans lequel l'axe de rotation (8) ou un plan s'étendant parallèlement à l'axe de rotation (8) et parallèlement à la troisième direction (Z) est de préférence disposé entre la première composante de moyen de détection et l'autre première composante de moyen de détection.

3. Capteur de vitesse de rotation (1) selon l'une quelconque des revendications précédentes, **caractérisé en ce que** le premier élément de Coriolis (3) est fixé au moyen de premiers ressorts (10) et/ou le second élément de Coriolis (2) est fixé au moyen de deuxièmes ressorts (9) à un cadre (11) et dans lequel le cadre (11) est de préférence fixé au substrat (13) au moyen de troisièmes ressorts (12) et dans lequel de préférence encore les moyens d'excitation (4) excitent le cadre en oscillation (6) .

4. Capteur de vitesse de rotation (1) selon la revendication 3, **caractérisé en ce que** les deuxièmes et/ou les troisièmes ressorts (9, 12) comprennent des ressorts en U et de préférence des ressorts en U sinueux et/ou **en ce que** les premiers ressorts (10) comprennent des ressorts de torsion et de préférence des ressorts de torsion présentant des structures fendues ou en échelle, dans lequel de préférence le deuxième ressort (9) n'est souple que dans la deuxième direction (Y), le troisième ressort (12) n'est souple que dans la première direction (X) et/ou le premier ressort (9) n'est souple que par rapport à une torsion autour de l'axe de rotation (8).

5. Capteur de vitesse de rotation (1) selon une des revendications 3 ou 4, **caractérisé en ce qu'**il est prévu des troisièmes moyens de détection (14) pour la détection de l'oscillation (6) du cadre (11), dans lequel les troisièmes moyens de détection (14) et/ou les moyens d'excitation (4) sont réalisés de préférence sous forme de structures en peigne.

6. Capteur de vitesse de rotation (1) selon l'une quelconque des revendications précédentes, **caractérisé en ce que** les deuxièmes moyens de détection (7) sont réalisés sous forme de structures en peigne, qui sont disposées de préférence conjointement avec le second élément de Coriolis (2) dans un plan parallèle à un plan d'extension principal (100) du substrat (13) et/ou les premiers moyens de détection sont disposés dans la troisième direction (Z) en recouvrement avec le premier élément de Coriolis (3).
